# DEMANDE DE BREVET EUROPEEN

(11) **EP 4 541 659 A1**
(43) Date de publication de la demande: **23.04.2025**
(21) Numéro de dépôt: 24205893.1
(22) Date de dépôt: 10.10.2024
(51) Int. Cl.: B60Q 1/04, E05F 5/02

(54) **PIÈCE DE FIXATION D'UN PROJECTEUR DE VÉHICULE AUTOMOBILE ADAPTÉE POUR SUPPORTER UNE BUTÉE D'UN CAPOT DU VÉHICULE ET DISPOSITIF DE BUTÉE DE CAPOT ASSOCIÉ**

(30) Priorité: 19.10.2023 FR 2311301
(71) Demandeur: Renault s.a.s, 92100 Boulogne Billancourt (FR)
(72) Inventeur: DERRIEN, Fabrice, 78280 GUYANCOURT (FR); MICHALSKI, Thierry, 78280 GUYANCOURT (FR); SANCHEZ, Marc-Antoine, 78280 GUYANCOURT (FR)

(57) **Abrégé**

Cette pièce (5) de fixation monobloc d'un projecteur (3) d'un véhicule (1) automobile comprend une partie de montage (5a) sur un support rigide (4) du véhicule. La pièce (5) comprend en outre une partie de support (5b) solidaire de la partie de montage (5a) et adaptée pour supporter une butée (2) d'un capot du véhicule.

## Description

### Domaine technique

La présente invention concerne une pièce de fixation d'un projecteur et un dispositif de butée d'un capot de véhicule automobile.

### Techniques antérieures

Classiquement, les butées de capot des véhicules automobiles sont montées sur des éléments rigides du châssis du véhicule, typiquement un longeron sensiblement longitudinal ou un élément transversal, dit « face avant technique », qui est porteur d'organes du véhicule.

La position et les caractéristiques mécaniques des butées de capot doivent répondre à une série d'objectifs souvent antagonistes. Par exemple, les butées de capot doivent être placées à des endroits où la réponse vibratoire du capot est importante afin que le maintien apporté soit efficace. Les butées de capot doivent être suffisamment rigides pour maintenir l'amplitude et la fréquence des vibrations du capot dans des plages acceptables. Cependant, les butées de capot doivent avoir une souplesse suffisante pour permettre un certain affaissement réglementaire du capot pour tenir compte de la protection des piétons en cas de choc de tête. Par ailleurs, la conception des butées de capot doit permettre des réglages de montage pour faciliter le ferrage.

Pour des raisons de rationalisation des coûts de fabrication, les fabricants de véhicules automobiles privilégient l'utilisation d'une même plateforme modulaire lors de la fabrication de modèles différents de véhicules. Cette plateforme comprend notamment le compartiment moteur.

Généralement, la plateforme est associée à une enveloppe ou carrosserie qui est spécifique à chaque modèle.

Cependant, certaines enveloppes ont un gabarit plus réduit qui se traduit par un espace plus contraint sous le capot, notamment dans le sens de la hauteur. Dans les cas les plus extrêmes, il devient difficile, voire impossible de positionner les butées de capot sur un longeron ou sur la face avant technique du châssis.

Prévoir une nouvelle pièce ayant pour seule fonction le support de la butée, engendrerait des coûts importants de production et de développement, notamment liés à l'intégration dans le compartiment moteur et aux risques de conflit avec les éléments préexistants.

Par ailleurs, de telles butées ont une fonction de maintien du capot et sont soumises à d'importantes vibrations. Ces vibrations se transmettent aux supports des butées et sont incompatibles avec les exigences normatives de sécurité concernant les projecteurs, à cause des risques importants de scintillement du faisceau lumineux engendrés par les vibrations.

### Exposé de l'invention

L'invention a pour but de fournir un support pour une butée de capot et un dispositif de butée de capot permettant d'atteindre la série d' objectifs cités précédemment.

De tels support et dispositif de butée sont compatibles avec des enveloppes de gabarit réduit, privilégient l'utilisation d'éléments déjà existants dans le compartiment moteur et n'engendrent pas de risque de scintillement des proj ecteurs.

L'invention a pour objet une pièce de fixation monobloc d'un projecteur d'un véhicule automobile comprenant une partie de montage sur un support rigide du véhicule.

La pièce comprend en outre une partie de support solidaire de la partie de montage et adaptée pour supporter une butée d'un capot du véhicule. Une telle pièce de fixation permet de mutualiser les fonctions de fixation du projecteur et de support de butée.

Avantageusement, la partie de support est en porte-à-faux. Une telle partie de support permet d'isoler le projecteur des vibrations de la butée et ainsi protège des risques de scintillement.

Par exemple, la pièce de fixation est réalisée en matière plastique. Une telle caractéristique facilite la fabrication monobloc de la pièce.

Selon une caractéristique avantageuse, la pièce de fixation comprend une plaque munie sur son pourtour d'une paroi verticale orientée dans une direction opposée au support rigide par rapport à la plaque. Une telle configuration permet d'augmenter la raideur en flexion de la pièce de fixation en remontant l'axe neutre de la pièce. De plus, cette configuration favorise une bonne fixation entre la partie de montage et le support rigide du véhicule.

De préférence, la pièce de fixation comprend au moins un raidisseur solidaire de la paroi et de la plaque et/ou au moins une ailette disposée sur la paroi et parallèle à la plaque. Une telle configuration améliore la raideur de la pièce de fixation.

Selon une caractéristique, des nervures du projecteur sont connectées solidairement à un bord avant de la partie de montage adjacent au projecteur. Le projecteur est ainsi fixé au support rigide du véhicule par l'intermédiaire de la partie de montage de la pièce de fixation.

Selon une autre caractéristique, la partie de support est munie d'une ouverture adaptée pour accueillir une butée de capot. Cette caractéristique permet de maîtriser la position de la butée et favorise une bonne fixation de la butée sur la partie de support.

L'invention a également pour objet un dispositif de butée de capot comprenant une pièce de fixation telle que définie ci-dessus, et une butée de capot montée sur la partie de support de la pièce de fixation.

De préférence, la butée de capot comprend une embase taraudée montée sur la partie de support, une vis de réglage filetée qui coopère avec l'embase taraudée, une tige de butée montée sur la vis, une pastille de compression qui coiffe la tige de butée, et une garniture entourant la tige de butée et s'étendant entre la vis de réglage et la pastille de compression.

L'invention a encore pour objet un véhicule automobile comprenant au moins une pièce de fixation ou au moins un dispositif de butée de capot tels que décrit ci-dessus.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] est une vue en perspective partielle de l'avant d'un véhicule automobile comprenant un dispositif de butée de capot selon un mode de réalisation de l'invention ; et
[Fig 2] est une vue en coupe du dispositif de butée de capot de la [Fig 1] selon une direction II-II.

### Exposé détaillé d'au moins un mode de réalisation

Dans la description, les directions et orientations sont données en référence à un repère orthonormé direct classiquement utilisé en conception automobile, dans lequel X désigne la direction longitudinale avant - arrière du véhicule, pointant vers l'arrière du véhicule, Y est la direction transversale au véhicule pointant vers la droite du véhicule, et Z est la direction verticale, pointant vers le haut.

Les notions « avant » et « arrière » sont données en référence au sens de marche normal, vers l'avant du véhicule.

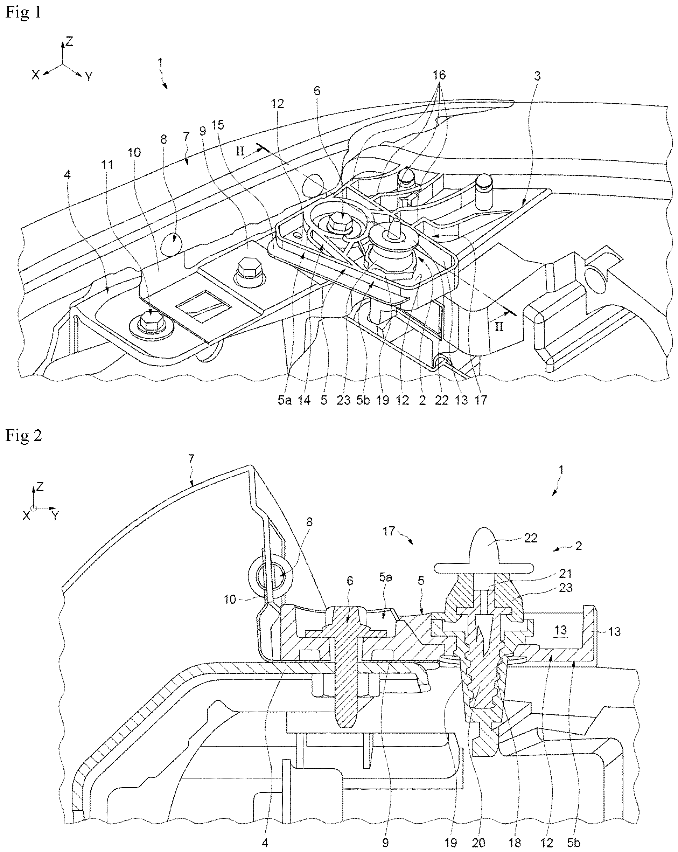

La Figure 1 montre partiellement l'avant d'un véhicule 1 comportant un capot non illustré, en position ouverte. Le capot s'ouvre en pivotant autour d'axes de rotation, non illustrés, situés le long de son bord situé en bas du pare-brise du véhicule.

Des butées 2 sont fixées à proximité du bord avant du capot. Les butées 2 permettent d'éviter que le capot n'entre en contact avec la structure du véhicule lors du claquage du capot lors de la fermeture du capot, et d'amortir le choc du claquage. Les butées 2 sont placées sur la partie avant du capot car, lors du claquage, cette partie se déplace avec une plus grande vitesse que le reste du capot, puisqu'elle doit parcourir la plus grande distance entre la position ouverte et la position fermée.

Le véhicule 1 est équipé de projecteurs 3 positionnés à l'avant du véhicule.

Ici, le projecteur 3 est fixé sur un support rigide 4 du véhicule 1 par l'intermédiaire d'une pièce 5 de fixation monobloc, c'est-à-dire formée d'un seul tenant.

La pièce 5 comprend une partie de montage 5a qui est fixée sur le support rigide 4 à l'aide de moyens de fixation 6, par exemple des boulons.

La pièce 5 comprend en outre une partie de support 5b solidaire de la partie de montage 5a et adaptée pour supporter la butée 2 du capot du véhicule 1.

La partie latérale avant du véhicule est munie d'une enveloppe externe ou aile 7 fixée indirectement au support rigide 4 par l'intermédiaire d'une tôle 9 et à l'aide de moyens d'assemblage 8, tels que des points de soudure ou des rivets.

La Figure 2 est une vue en coupe de la pièce de fixation 5 de la Figure 1, selon un plan vertical YZ.

Les mêmes références correspondent aux mêmes éléments d'une figure à l'autre.

Dans l'exemple illustré sur les Figures 1 et 2, l'aile 7 est fixée par les moyens d'assemblage 8 sur un bord vertical 10 de la tôle 9. La tôle 9 est fixée sur le support rigide 4 à l'aide de moyens de fixation tels que des boulons 11.

La fixation de la tôle 9 sur le support rigide 4 est améliorée par la présence de la pièce de fixation 5 qui serre la tôle 9 contre le support rigide 4 par l'intermédiaire des moyens de fixation 6.

La pièce 5 de fixation s'appuie sur le support rigide 4, et la partie de support 5b de la pièce 5 est en porte-à-faux. Autrement dit, aucun appui extérieur à la pièce 5 ne se trouve en contact avec la zone de support 5b.

La pièce de fixation 5 comprend une plaque 12 commune entre la partie de montage 5a et la partie de support 5b. La plaque 12 est munie sur son pourtour d'une paroi 13 verticale orientée dans une direction opposée au support rigide 4 par rapport à la plaque 12. De préférence, la paroi 13 est continue sur tout le pourtour de la plaque 12.

Tel qu'illustré sur la Figure 1, le projecteur 3 est muni de nervures 16 qui sont connectées solidairement à un bord avant de la partie de montage 5a et adjacent au projecteur 3. Cette configuration permet de fixer le projecteur 3 au support rigide 4 par l'intermédiaire de la pièce de fixation 5 et des moyens de fixation 6. Il est à noter que les nervures 16 ne sont pas connectées à la partie de support 5b, qui doit rester en porte-à-faux, mais uniquement à la partie de montage 5a. Ici, le projecteur est muni de quatre nervures 16 verticales. Selon les configurations, le nombre de nervures 16 et leur forme peut varier.

Dans l'exemple illustré sur les Figures 1 et 2, la pièce de fixation 5 comprend au moins un raidisseur 14 solidaire de la paroi 13 et de la plaque 12. La pièce 5 peut également être raidie par une ailette 15 disposée sur la paroi 13 et parallèle à la plaque 12. De préférence, l'ailette 15 est disposée de manière à ne pas gêner la connexion de la pièce 5 avec les nervures 16 du projecteur 3, par exemple à l'arrière de la pièce de fixation 5.

A titre d'exemple, la raideur minimale de la pièce de fixation 5 au niveau du support de la butée 2 est de l'ordre de 250 N/mm, c'est-à-dire qu'il faut une force verticale minimale de 250 N appliquée sur la butée pour engendrer un déplacement vertical de la pièce de fixation égal à un millimètre.

En variante, il reste possible de ne pas raidir la pièce 5 et de ne pas prévoir de raidisseur ni d'ailette sur la pièce 5.

La partie de support 5b est munie d'une ouverture 18 adaptée pour accueillir une butée 2 de capot. La pièce de fixation 5 et la butée 2 de capot font partie d'un dispositif 17 de butée de capot selon l'invention.

Tel qu'illustré sur la figure 2, la butée 2 comprend une embase 19 taraudée montée sur la partie de support, par exemple sertie ou insérée à force dans l'ouverture 18. La butée 2 comprend également une vis 20 de réglage filetée qui coopère avec le taraudage de l'embase 19, une tige 21 de butée montée sur la vis 20, une pastille 22 de compression qui coiffe la tige 21 de butée, et une garniture 23 entourant la tige 21 de butée et s'étendant entre la vis 20 de réglage et la pastille 22 de compression.

Ici, la vis 20 et l'embase 19 sont coniques, mais en variante elles peuvent être cylindriques. Il est bien entendu possible d'utiliser d'autres configurations de butée sans pour autant sortir du cadre de l'invention.

## Revendications

1. Pièce (5) de fixation monobloc d'un projecteur (3) d'un véhicule (1) automobile comprenant une partie de montage (5a) sur un support rigide (4) du véhicule, ladite pièce (5) étant **caractérisée en ce qu'**elle comprend en outre une partie de support (5b) solidaire de la partie de montage (5a) et adaptée pour supporter une butée (2) d'un capot du véhicule.

2. Pièce de fixation selon la revendication 1, dans laquelle la partie de support (5b) est en porte-à-faux.

3. Pièce de fixation selon l'une quelconque des revendications précédentes, réalisée en matière plastique.

4. Pièce de fixation selon l'une quelconque des revendications précédentes, comprenant une plaque (12) munie sur son pourtour d'une paroi (13) verticale orientée dans une direction opposée au support rigide (4) par rapport à la plaque (12).

5. Pièce de fixation selon la revendication 4, comprenant au moins un raidisseur (14) solidaire de la paroi (13) et de la plaque (12) et/ou au moins une ailette (15) disposée sur la paroi (13) et parallèle à la plaque (12).

6. Pièce de fixation selon l'une quelconque des revendications précédentes, dans laquelle des nervures (16) du projecteur (3) sont connectées solidairement à un bord avant de la partie de montage (5a) adjacent au projecteur.

7. Pièce de fixation selon l'une quelconque des revendications précédentes, dans laquelle la partie de support (5b) est munie d'une ouverture (18) adaptée pour accueillir une butée (2) de capot.

8. Dispositif (17) de butée de capot de véhicule automobile comprenant une pièce (5) de fixation selon l'une quelconque des revendications précédentes, et une butée (2) de capot montée sur la partie de support (5b) de ladite pièce de fixation.

9. Dispositif de butée selon la revendication 8, dans lequel la butée (2) de capot comprend une embase (19) taraudée montée sur la partie de support (5b), une vis (20) de réglage filetée qui coopère avec ladite embase (19) taraudée, une tige (21) de butée montée sur la vis (20), une pastille (22) de compression qui coiffe la tige (21) de butée, et une garniture (23) entourant la tige de butée et s'étendant entre la vis (20) de réglage et la pastille (22) de compression.

10. Véhicule (1) automobile comprenant au moins une pièce (5) de fixation selon les revendications 1 à 7 ou comprenant au moins un dispositif de butée de capot selon la revendication 8 ou 9.
